(19) Europäisches Patentamt
European Patent Office
Office européen des brevets

(11) Veröffentlichungsnummer: **0 147 795**
**B1**

(12) # EUROPÄISCHE PATENTSCHRIFT

(45) Veröffentlichungstag der Patentschrift: **16.03.88**

(51) Int. Cl.⁴: **C 02 F 1/72**

(21) Anmeldenummer: **84115892.6**

(22) Anmeldetag: **20.12.84**

(54) **Verfahren zur Abwasserreinigung.**

(30) Priorität: **30.12.83 ES 528559**

(43) Veröffentlichungstag der Anmeldung: **10.07.85 Patentblatt 85/28**

(45) Bekanntmachung des Hinweises auf die Patenterteilung: **16.03.88 Patentblatt 88/11**

(84) Benannte Vertragsstaaten: **AT BE CH DE FR GB IT LI NL SE**

(56) Entgegenhaltungen:
**CH-A-599 060**
**DE-A-2 352 856**
**US-A-3 781 200**
**US-A-4 159 944**

**W.C. SCHUMB et al.: "Hydrogen peroxide", Seiten 467-469,476-477,505, Reinhold Publishing Corporation, New York, US**

(73) Patentinhaber: **Llatas Escrig, Ignacio, Mayor, 2, Villar del Arzobispo (Valencia) (ES)**

(72) Erfinder: **Llatas Escrig, Ignacio, Mayor, 2, Villar del Arzobispo (Valencia) (ES)**

(74) Vertreter: **Körber, Wolfhart, Dr., Patentanwälte Dipl.- Ing. H. Mitscherlich Dipl.- Ing. K. Gunschmann Dr.rer.nat. W. Körber Dipl.Ing. J. Schmidt- Evers Dipl.- Ing. W. Melzer Steinsdorfstrasse 10, D-8000 München 22 (DE)**

**EP 0 147 795 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung behandelt ein Verfahren zur Abwasserreinigung mittels chemischer Oxidierung mit dem aus der katalytischen Zersetzung des Wasserstoffperoxids in ununterbrochener Reaktion mit dem Jodid/Jodpaar oder umgekehrt entstehenden Sauerstoff.

Die Behörden Spaniens als auch die anderer Länder haben zur Pflicht gemacht, daß die ins Meer und natürlichen oder künstlichen Wasserläufe abfließenden Abwässer vorher gereinigt werden müssen, wobei diese Reinigung die Abwässer von menschlichen Tätigkeiten, entweder häuslicher oder industrieller Art, sowie auch die Wässer aus dem gemeinsamen oder einzelnen Kanalsystem betrifft.

Alle derzeitigen Verfahren zur Abwasserreinigung folgen einer wissenschaftlich festgelegten Norm, damit die Reinigung richtig und wirksam ist. Diese Norm ist folgende:

1.- Vorbehandlung;

2.- Primäre Behandlung;

3.- Sekundäre Behandlung;

4.- Tertiäre Behandlung;

5.- Desinfektion.

Jede dieser Phasen kann ihrerseits aus verschiedenen Arten bestehen.

Wenn man die vorgenannten Phasen kurz zusammenfaßt, so kann man sagen, daß es folgende sind:

1. - Vorbehandlung

Der Zweck derselben ist die Beseitigung von schwimmender oder nicht schwimmender Materie, von in Schwebe befindlichen Körpern, Sand, Ölen und nicht emulgierten Fetten, die auf folgende Weise vorgenommen werden kann:

a. mittels Siebung, die darin besteht, daß das Abwasser durch ein Gitter oder Sieb geleitet wird, welches eine geringere Weite hat als das, was man zu bezeitigen wünscht;

b. durch einen Entsander, um (mittels geringer Strömgeschwindigkeit des Wassers) die festen Stoffe zu entfernen, die auf dem Boden des Behälters ablagern.

2. -Primäre Behandlung

Diese hat den Zweck, in Schwebe befindliche Körper zu beseitigen. Dies kann geschehen:

a. durch Ablagerung, die dadurch erlangt wird, daß man die Geschwindigkeit des Abwasserumlaufs so weit verringert, bis ein genügend kleiner Wert erreicht wird, damit sich die ablagerungsfähige Materie auf dem Boden des Ablagerungsbeckens absetzt;

b. durch Ausflockung/Gerinnung.

Wie bekannt, ist die Ausflockung die Bildung von Flocken durch Verbindung der in einer Flüssigkeit in Schwebe befindlichen Teilchen, während die Gerinnung die durch Zusatz von chemischen Produkten gebildete Flockung ist. Beispiele: Alaun $(SO_4)\ _3Al_2$. 18 $H_2O$; Natriumaluminat: $Al_2O_4Na_2$; Ferrosulfat: $SO_4Fe.7H_2O$... usw.

c. Mittels Filtrierung, die darin besteht, daß man eine in Schwebe befindliche, Stoffe enthaltende Flüssigkeit durch ein Filtriermittel fließen läßt, das zwar die Flüssigkeit durchläßt, nicht aber die festen Teilchen, die vom Filtriermittel zurückgehalten werden. Es ist dies eine die Gerinnung und Ablagerung ergänzende Operation.

Die am meisten als Filtriermittel gebrauchten sind Sand, Anthrazit und Infusorienerde.

3. - Sekundäre Behandlung.

Sie hat die Beseitigung der löslichen anorganischen Salze und der gelösten und halbgelösten organischen Materie zum Zwecke. Dazu ist es notwendig, daß ein Wachstum von Mikroorganismen (Bakterien, Mikropilzen, Algen, Protozoen, Rotifere...) mit oder ohne Sauerstoffzufuhr (aerober oder anaerober Prozeß) besteht.

Durch die Zunahme der Masse Mikroorganismen (auch Biomasse oder biologische Masse genannt) erreicht man, daß die gelösten Salze, Nährstoffe und organische Materie des Abwassers von den Zellen der Biomasse einverleibt werden, wodurch sich ihre Konzentration im Abwasser verringert.

Wenn Sauerstoff (aerober Prozeß) benötigt wird, wird die sekundäre Behandlung biologische Oxidation genannt.

Diese sekundäre Behandlung kann auf folgende Art erfolgen:

a. Durch Stabilisierungsbecken (auch Stabilisierungslagunen genannt).

Diese Becken werden im Gelände mit 1 bis 3 Meter Tiefe angelegt und bilden den einfachsten biologischen Oxidationsprozeß, wenn sie auch sehr großes Gelände brauchen. Sie werden in drei Kategorien geteilt:

Aerobe Becken: Sie hängen von den Algen zwecks Sauerstoff zufuhr ab und infolgedessen vom Sonnenlicht. Ihre Tiefe darf nicht größer als 1,50 Meter sein. Die Retentionsdauer des Abwassers muß 2 bis 6 Tage betragen, damit dessen Reinigung wirksam ist.

Fakultative Becken: Diese arbeiten auf aerobe Weise an der Oberfläche und auf anaerobe am Boden. Die wirksame Retentionsdauer beträgt 7 bis 30 Tage.

Anaerobe Becken: Das sind diejenigen, bei denen der Gehalt an organischer Materie des Abwassers so hoch ist, daß die anaeroben Bedingungen in der ganzen Flüssigkeitsmenge konstant bleiben. Ihre wirksame Retentionsdauer ist 30 bis 50 Tage.

b. Durch belüftete Lagunen (auch Oxidationsteiche genannt).

Sie ähneln den Stabilisierungsbecken, ausgenommen, daß die Sauerstoffzufuhr mittels mechanischer oberflächlicher Belüfter geschieht.

c. Mittels Perkolationsfiltern (auch Bakterienschichten genannt).

Sie bestehen aus einer Schicht von Steinen mit 10 cm Durchmesser und 1 bis 3 m Tiefe, die eine große

Oberfläche einnimmt und über welche das Abwasser mit einem Schwenkarm abgelagert wird. Dieses Abwasser wird beim Durchsickern durch die Wirkung der vorhandenen Mikroorganismen gereinigt.

d. Durch Klärschlamm (auch Belebtschlamm genannt).

Dieses Verfahren besteht in der Belüftung in einem rechteckigen Becken (5 bis 10 Stunden) und danach in einem runden Ablagerungs- und Kontaktbecken (5 bis 15 Tage). Im ersten Becken besteht ein schnelles biologisches Wachstum durch Sauerstoffzuführung aus der Luft und Umrühren des Wassers. Im zweiten Becken wird die Mineralisierung der organischen Materie und die Ablagerung der biologischen Materie (Biomasse) vervollständigt, die wieder in das erste Becken zwecks besserer Wirkung des Prozesses zurückgeleitet wird.

4. - Tertiäre Behandlung.

Nachdem das Abwasser der Vorbehandlung und der primären sowie sekundären Behandlung unterworfen worden ist, verbleibt in demselben gewöhnlich ein hoher Gehalt an in Lösung befindlichen Produkten, die in den vorangegangenen Behandlungen nicht beseitigt worden sind. Diese Produkte sind gewöhnlich ionischen oder molekularen Typs. Zum ersten Falle gehören die löslichen Mineralsalze (Schwermetalle und schädliche Metalle) und zum zweiten organische Produkte hohen Molekulargewichts (nicht biozersetzbare Verbindungen).

Diese tertiäre Behandlung hat die Beseitigung dieser Produkte zum Zweck. Die tertiäre Behandlung kann wie folgt geschehen:

a. Durch ionischen Austausch, in dem nach Ermittlung, ob Anion oder Kation diese Produkte fixiert, diese aus dem Abwasser nach Durchlaufen desselben durch ein spezifisches Ionenaustauscherharz ausgeschieden werden.

b. Mittels Adsorption, welche ein physisch-chemischer oberflächlicher Vorgang ist, durch welchen gewisse Produkte großer spezifischer Oberfläche andere Produkte zurückhalten, die sich im Abwasser befanden, indem dieses mit dem Adsorptionsstoff in Verbindung gebracht wird.

c. Durch umgekehrte Osmose, die durch Anwendung von Druck auf eine Lösung durchgeführt wird, die mit einer halbdurchlässigen Membran in Kontakt gebracht wird, durch die wohl das lösende Material, nicht aber das gelöste hindurchgeht.

5. - Desinfektion.

Man sagt, ein Wasser ist einer Desinfektionsbehandlung unterworfen worden, wenn alle Krankheitskeime entfernt worden sind.

Es gibt verschiedene chemische Produkte, die man zu diesem Zwecke gebrauchen kann, wobei die jeweilige Anwendung von den Eigenschaften des zu desinfizierenden Wassers abhängt.

Beispiele: übermangansaures Kali, Ozon, Chlor und deren Derivate oder dergleichen.

Das Wasserstoffperoxid, welches die Basis des Verfahrens gemäß der Erfindung ist, wird zur Zeit z. B. von der Firma Foret S.A. zur Beseitigung von Schwefelwasserstoff benutzt und wurde auch von Bayer AG zur Entfernung von Hydrazin probiert. Foret S.A. mischt das Wasserstoffperoxid mit dem Abwasser und wartet die Reaktion zwischen dem Peroxid und dem Schwefelwasserstoff ab. Sie gebrauchen keinen Katalysator. Bayer AG dagegen gibt nicht an, wann oder wo sie die Mischung vornimmt, gebraucht aber einen Katalysator, damit sich das Wasserstoffperoxid zersetzt. In diesem Falle ist der Katalysator ein Palladiumharz. Die erhaltenen Ergebnisse sind nicht zufriedenstellend.

Das Abwasserreinigungsverfahrem gemäß der Erfindung besteht aus fünf Phasen, die dazu führen, daß jede Art Abwasser einer wirksamen chemisch-biologischen Reinigung nach seiner Behandlung unterzogen ist, die durch aufeinanderfolgendes Durchlaufen des Abwassers durch fünf entsprechend geeignete Becken durchgeführt wird, damit in jedem derselben eine Verfahrensphase abgewickelt wird. Von diesen fünf Phasen, deren Ablauf nachstehend erläutert wird, betrifft die erste den Wasserdurchlauf durch den Entsander/Strömungsregler, die zweite den Durchlauf durch den primären Ablagerungsfänger, bereits bei dieser Klasse von Abwassereinigungsverfahren bekannt, während die Behandlung, der das Abwasser in den anderen drei folgenden Phasen unterzogen wird, den wesentlichen Bestandteil der Erfindung bildet.

Die anspruchsgemäß vorgesehene Besonderheit besteht dabei darin, daß man nach diesen zwei ersten Phasen das zu reinigende Wasser ein drittes Becken oder Bassin (3) durchlaufen läßt, in dem es einer starken Oxidation mit Wasserstoffperoxid mittels katalytischer Zersetzung durch Kaliumjodid (KJ) unterzogen wird, das in Verbindung mit der in die Nähe vom pH-Wert 7 gebrachten Lösung des Wasserstoffperoxids eine ständige Oxidation-Reduktion erleidet, und daß man das Abwasser in das Becken oder Bassin (3) starker Oxidation durch eine parallel zu den Raumwänden liegende Leitung einlaufen läßt, die bis zu einer angemessenen Entfernung vom Boden reicht, wo ein Richtungslenker der Strömung angeordnet ist um zu vermeiden, daß das einlaufende Wasser sich mit dem Wasserstoffperoxid vermischt und dadurch den Zersetzungsprozeß stört, und dann das genannte bereits vorbereitete Wasserstoffperoxid und die Katalysatorlösung (Kaliumjodid KJ) am unteren Teil des Beckens und dicht am Boden mittels angemessener Dosierer eingeführt werden.

Ausweislich der DE-A 2 352 856 ist zwar schon die Entgiftung von Wässern mit einem Gehalt an Cyaniden und Nitrilen dadurch vorgenommen worden, daß Wasserstoffperoxid in Gegenwart von Jodionen oder freiem Jod, gegebenenfalls in weiterer Gegenwart von Silberionen, in zweckmäßigerweise jeweils berechneten Mengen zum Einsatz gelangt. Jedoch ist dort - abgesehen von der unterschiedlichen Art des Vermischens-bei offenen Anlagen ein deutlich alkalischer pH-Wert angeführt. Die beanspruchte Verfahrensdurchführung wurde also durch dieses, einen ganz speziellen Reinigungsfall betreffende Dokument nicht nahegelegt.

Um die Beschreibung des Verfahrens zu erleichtern und nur zur Erläuterung wird ein Blatt Zeichnungen

beigefügt, auf welchem in der

Figur 1 in Draufsicht schematisch eine Anlage oder Anzahl Becken oder Bassins dargestellt ist, in welchen das Abwasserreinigungsverfahren gemäß der Erfindung durchgeführt werden kann und

Figur 2 ein Vertikalschnitt durch diese Anlage ist.

Es muß hervorgehoben werden, daß diese Zeichnungen nur ein schematisches Beispiel der Reinigungsanlage oder -werks wiedergeben, welches Änderungen zwecks Anpassung an die jeweiligen Umstände unterworfen sein kann, weshalb sie im weitestgehenden Sinne ausgelegt werden müssen.

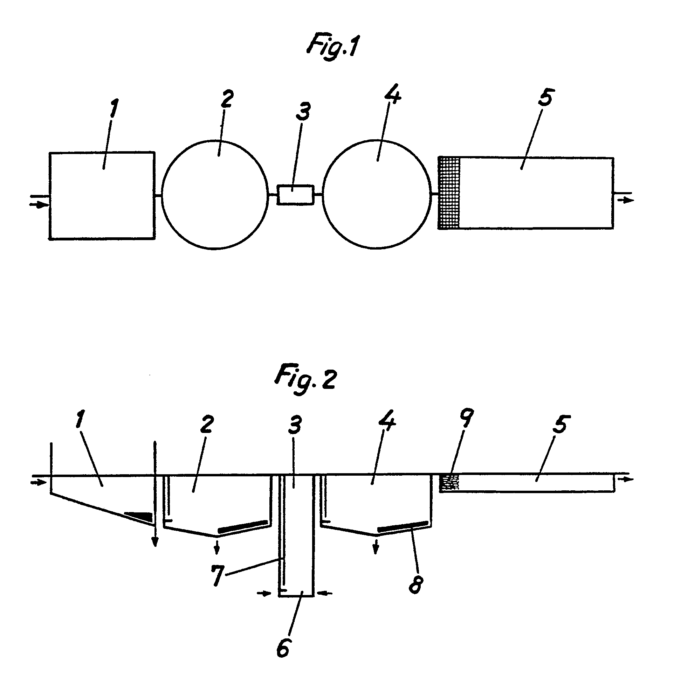

Die in den erwähnten Figuren 1 und 2 dargestellten Becken oder Bassins, welche eine Kläranlage bilden, sind mit Bezugsnummern versehen, die den verschiedenen Phasen des Verfahrens entsprechen, welches in jeder durchgeführt wird, und zwar bezeichnen diese Nummern wie folgt:

1. - Sandfänger/Ablaufregler;
2. - Primäre Ablagerung;
3. - für starke Sauerstoffzufuhr;
4. - für schwache Sauerstoffzufuhr/sekundäre Ablagerung/Klärung
5. - für Filtrierung/Belebung/Schlußbelüftung.

Das Abwasserreinigungsverfahren gemäß der Erfindung setzt sich insgesamt aus den folgenden fünf Arbeitsphasen zusammen:

1. Sandfang und Ablaufregler.

Dies erfolgt durch Zufuhr von Abwasser in das Becken oder Bassin 1, in welchem die schwimmenden oder nichtschwimmenden groben Stoffe, die öle, Fette und nicht vermischbarer Abschaum entfernt werden. Damit die Kläranlage regelmäßig während der 24 Stunden des Tages arbeiten kann, ist am Auslauf dieses Beckens oder Bassins 1 ein Ablaufregler angebracht, mittels welchem der ständige und kontinuierliche Auslauf einer bestimmten Abwassermenge kontrolliert wird.

2. Primäre Ablagerung, in welcher die in Schwebe befindlichen feinen Stoffe ausgeschieden werden, zu welchem Zwecke das Abwasser in das Becken oder Bassin 2 geleitet wird, wo es zur Ablagerung bleibt.

3. Starke Sauerstoffzufuhr, die im Becken oder Bassin 3 durchgeführt wird, in welches Wasserstoffperoxid geleitet wird, das auf das Abwasser durch katalytische Zersetzung mittels Kaliumjodid (KJ) wirkt, das in Verbindung mit dem Wasserstoffperoxid eine ständige Oxidation-Reduktion nach folgenden Reaktionen erleidet:

A) $2KJ + H_2O_2 \text{--} J_2 + 2K(OH)$

B) $J_2 + 2K(OH) + H_2O_2 \text{--} 2KJ + 2H_2O + O_2$

C) $2H_2O_2 \text{--} 2H_2 + O_2$

Der beim Verschwinden aus der Reaktion gebildete Sauerstoff bewirkt, da er ja Gas ist, daß die gesamte Reaktion (C) sich nach rechts verlagert und so die Zersetzung des Wasserstoffperoxids begünstigt.

Bedingung dafür, daß dies geschieht, ist, daß der pH-Wert der Wasserstoffperoxidlösung vorher neutralisiert ist (pH7) oder in der Nähe desselben liegt. Es ist angebracht, daß der pH-Wert bei 7 oder leicht unter 7 liegt, den bei basischen pH's ist die Wasserstoffperoxidlösung unbeständig.

Als Neutralisierungsmittel wird Kaliumhydroxyd (KOH) in konzentrierter Lösung und nicht in fester Form gebraucht, denn diese zersetzt das Wasserstoffperoxid beim Auflösen. Als Neutralisierungsmittel könnte auch KJ gemäß der Reaktion (A) verwendet werden, aber dann wäre der Verbrauch desselben größer und die Reaktion verläuft nicht so rein.

Man könnte ebenso und nachdem einmal die Lösung von Wasserstoffperoxid mit der Lösung von KOH neutralisiert ist, die Reaktion mit elementarem Jod ($I_2$) beginnen. Dies ist der Fall mit den im Laboratorium durchgeführten Experimenten. Die Reihenfolge der Reaktionen wäre dann umgekehrt die erste (B), die zweite (A), aber die gesamte Reaktion (C) wäre dieselbe.

Die in den Laborexperimenten gebrauchte Wasserstoffperoxidlösung ist die im Handel von der Firma FORET S.A. angebotene von 30 % im Gewicht. Diese hat eine Dichte von ungefähr 1,2 g/ml. Dank dieser Dichte und indem diese Eigenschaft ausgenutzt wird, erreicht man, daß die Wasserstoffperoxidlösung sich nicht mit dem zu behandelnden Abwasser vermischt, sondern eine andere flüssige Schicht am Boden 6 des Raumes 3 gebildet wird, und wenn sich diese Schicht gebildet hat, geht man an ihre Zersetzung durch den Katalysator.

Der Abwasserzufluß in das Becken 3 erfolgt durch die Leitung 7, die parallel zu den Raumwänden läuft und bis zu einem angebrachten Abstand vom Boden reicht. Ein Ablenker der Strömungsrichtung ist angeordnet, um zu vermeiden, daß sich das einfließende Wasser mit dem Wasserstoffperoxid auf dem Boden vermischt und den Zersetzungsprozeß stört. Das bereits vorbereitete Wasserstoffperoxid und die Lösung des Katalysators, Kaliumjodid (KJ), werden am unteren Teil und dicht am Boden dieses Beckens 3 eingeführt, wozu die zweckmäßigen Dosierer angeordnet sind.

In diesem Raum wird erreicht, folgendes zu entfernen bzw. umzuwandeln: gelöste und kolloidale organische Stoffelösliche anorganische Stoffe - organisierte biologische Materie, wobei die ersten Präzipitatsflocken erscheinen, welche dank der Auftriebskraft des Gases Sauerstoff sich niemals in diesem Raum 3 ablagern, sondern erst im darauffolgenden.

4. Schwache Oxidation (sekundäre Ablagerung/Klärung).

Diese wird im Becken oder Bassin 4 durchgeführt, wohin das Abwasser geleitet wird und das man dort ablagern läßt, um folgendes zu beseitigen: die flockenbildende organische Masse; die unlösliche anorganische Masse; die tote biologische Masse, welche am Boden des Beckens Schlamm oder Dreck bildet, welcher durch einen Bodenräumer 8 aufgegriffen und gesäubert wird.

Es wird auch eine langsame Oxidation durch die Zersetzung des möglichen Wasserstoffperoxids hervorgerufen, das der Sauerstoff bei seinem Aufstieg eventuell mitgerissen hat.

5. Filterung/Belebung/Schlußbelüftung.

Schließlich läßt man das Abwasser in das Becken oder Bassin 5 laufen, das mit einer Reihe von Umrührern und Sprudlern (in den Zeichnungen nicht dargestellt) versehen ist, die über das ganze Becken verteilt sind, wo durch die Filtrierung die entstandene Trübung beseitigt wird; die flüchtigen oxidierten Produkte und Rest-Wasserstoffperoxid verschwinden durch das Rühren und Belüften.

Die beschriebenen fünf Phasen des Verfahrens dauern insgesamt um 24 Stunden; die Gesamtdauer kann aber auch darüber oder darunter gehalten werden.

Wie schon oben gesagt, sind die Vorbehandlung, welche man in dem Verfahren gemäß der Erfindung Entsandung und Strömungsregelung nennt, und die primäre Behandlung, die in diesem Verfahren mit primärer Ablagerung bezeichnet wird, mit jedem bekannten Abwasserreinigungsverfahren gemein, nicht aber der Rest der Behandlungsverfahren, die den Gegenstand dieser Erfindung bilden, mit dem man die bekannten sekundären und tertiären Behandlungsphasen beseitigt und die biologische Oxidation mit den damit verbundenen Nachteilen unnötig macht, wie die Bildung von Biomasse, Energieverbrauch, Zeitverlust und Platzbedarf. An deren Stelle beruht das Verfahren gemäß der Erfindung auf einer chemischen Oxidierung durch Sauerstoff, der aus der katalytischen Zersetzung von Wasserstoffperoxid entsteht. Auf diese Weise werden die folgenden Vorteile gegenüber den herkömmlichen Verfahren erhalten.

Gegenüber den Stabilisierungslagunen bestehen sie darin, daß weniger Platz benötigt wird, daß die Reinigung in kürzerer Zeit stattfindet (1 Tag gegenüber von Monaten), und daß Infektions-, Insektenbrut- und Ansteckungskrankheits-Herde vermieden werden.

Im Vergleich zu Lagunen für Belüftung, Belebtschlamm und Perkolatorfilter besteht weniger Raumbedarf, ist die Dauer der Behandlung kürzer (1 Tag gegenüber von 1 - 5 Tagen) und der Stromverbrauch sehr gering. Hinzukommt, daß die bekannten konventionellen oben genannten Systeme nicht für Fabrikations- und Gemischtwässer verwendet werden können, denn sie verhindern das Wachstum und die Lebensfähigkeit der Biomasse zufolge des Gehalts an toxischen und Schwermetallen dieser Abwässer, und daß man nicht das Wachstum von Biomasse abzuwarten noch ihre Zerstörung befürchten muß, weil sie nicht besteht, sowie Schlamm oder Schmutzteile nicht von Neuem einer Behandlung unterworfen werden brauchen.

Gegenüber den Verfahren des Ionenaustausches, der umgekehrten Osmose und Adsorption fallen weniger Kosten an und ist die Wartung rationeller

Was die Chlorierung angeht, so ist die Salzmenge, die das Verfahren gemäß der Erfindung auf der Basis von Wasserstoffperoxid bewirkt, sehr gering und der Sauerstoff des Wasserstoffperoxids billiger und erreichbarer als Ozon.

Das Verfahren gemäß der Erfindung kann zur Reinigung von Industrie-, Ortschafts- und Gemischtabwässern angewandt werden, und umfaßt die folgenden Parameter:

A) aufgelöste, organische und kolloidale Materie,
B) anorganische, sehr giftige Materie,
C) anorganische, verseuchende Materie,
D) biologisch organisierte Materie.

Das Verfahren kann in einem kurzen Zeitraum (24 Stunden oder weniger), je nach dem Fall und den Bedingungen, durchgeführt werden, wie es die den im Anspruch festgelegten Regeln folgenden, im Laboratoriummaßstab ausgeführten Beispiele zeigen:

| | | Unbehandeltes Abwasser | Behandeltes Abwasser |
|---|---|---|---|
| 1.Fall: | Kolibakterien | 20.000.000/100 ml | 0 (Null) |
| 2.Fall: | Kolibakterien | 180.000.000/100 ml | 9.000/100 ml |
| | Detergentien | 15 mg/Liter | 6 mg/Liter |
| 3.Fall: | Kolibakterien | 26.000.000/100 ml | 0 (Null) |
| | Ammonium | 12 mg/Liter | 8 mg/Liter |
| 4.Fall: | Eisen | 65 mg/Liter | 0,12 mg/Liter |
| 5.Fall: | Blei | 350 mg/Liter | 0,76 mg/Liter |
| 6.Fall: | Kupfer | 127 mg/Liter | 0,24 mg/Liter |

Für alle nach der Erfindung im Laboratorium durchgeführten Experimente sind stets 500 ml Abwasser und 10 ml Wasserstoffperoxid zu 30 % an Gewicht (110 Volumen) gebraucht worden, wobei man bis zum Verhältnis 1000 ml Abwasser / 1 ml Wasserstoffperoxid je nach Fall und Bedingungen gelangen kann.

Es muß hervorgehoben werden, daß das vorstehend beschriebene Verfahren gemäß der Erfindung durch einen Fachmann Änderungen sekundärer Art unterzogen werden kann, wenn dadurch nicht die wesentlichen

Kennzeichen verändert werden, die in den nachstehenden Ansprüchen zusammengefaßt werden.

## Patentansprüche

1. Verfahren zur Abwasserreinigung, das in einer Vorbehandlung des Abwassers in einem Entsandungs- und Strömungsreglerbecken besteht, um die groben, schwimmenden oder nicht schwimmenden Stoffe, in Schwebe befindlichen festen Körper, Sand, Öle und nicht emulgierten Fette zu beseitigen, und in einer darauffolgenden primären Behandlung in einem anderen Becken zur Entfernung mittels Ablagerung der in Schwebe befindlichen festen Körper, dadurch gekennzeichnet, daß man nach diesen zwei ersten Phasen das zu reinigende Wasser ein drittes Becken oder Bassin (3) durchlaufen läßt, in dem es einer starken Oxidation mit Wasserstoffperoxid mittels katalytischer Zersetzung durch Kaliumjodid (KJ) unterzogen wird, das in Verbindung mit der in die Nähe vom PH-Wert 7 gebrachten Lösung des Wasserstoffperoxids eine ständige Oxidation-Reduktion erleidet, und daß man das Abwasser in das Becken oder Bassin (3) starker Oxidation durch eine parallel zu den Raumwänden liegende Leitung einlaufen läßt, die bis zu einer angemessenen Entfernung vom Boden reicht, wo ein Richtungslenker der Strömung angeordnet ist um zu vermeiden, daß das einlaufende Wasser sich mit dem Wasserstoffperoxid vermischt und dadurch den Zersetzungsprozeß stört, und dann das genannte bereits vorbereitete Wasserstoffperoxid und die Katalysatorlösung (Kaliumjodid KJ) am unteren Teil des Beckens und dicht am Boden mittels angemessener Dosierer eingeführt werden

2. Verfahren nach Anspruch 1, dadurch gekennzeichnet, daß der pH-Wert der Wasserstoffperoxidlösung zur Begünstigung der Zersetzung bei 7 oder leicht unter 7 liegt.

3. Verfahren nach den Ansprüchen 1 und 2, dadurch gekennzeichnet, daß als Neutralisator Ätzkalium (KOH) in konzentrierter Lösung oder KJ verwendet wird, wodurch die Einleitung der Reaktion mit elementarem Jod ($J_2$) nach Neutralisierung der Wasserstoffperoxidlösung verursacht wird.

4. Verfahren nach den Ansprüchen 1 bis 3, dadurch gekennzeichnet, daß die Lösung des verwendeten Wasserstoffperoxids eine solche mit 30 bis 50 Gewichtsprozent mit einer Dichte ungefähr 1,2g/ml ist.

5. Verfahren nach den Ansprüchen 1 bis 4, dadurch gekennzeichnet, daß das schon mit dem Wasserstoffperoxid behandelte Wasser vom dritten Becken oder Bassin (3), auf welches sich der Anspruch 1 bezieht, in ein viertes Becken oder Bassin (4) geleitet wird, wo man es ablagern läßt, in dem man es einer schwachen oder langsamen Oxidation durch Zersetzung des eventuellen Wasserstoffperoxids unterwirft, das der Sauerstoff bei seinem Aufstieg mitgerissen hat, wonach man den auf dem Boden gebildeten Schlamm aufgreift und säubert.

6. Verfahren nach den Ansprüchen 1 bis 5, dadurch gekennzeichnet, daß das Abwasser vom vierten Becken oder Bassin (4), auf das sich der Anspruch 5 bezieht, in ein fünftes Becken oder Bassin (5) durch ein an seinem Einlauf angeordneten Sandfilter geleitet wird, in dem es mittels Rührwerken und Düsen in Bewegung gehalten wird.

## Claims

1. A method for sewage clarification, the method including the step of conditioning the sewage in a desanding and flow control basin for removing the coarse, floating or non-floating substances, suspended solids, sand, oils and non-emulsified fats, and further including a subsequently following primary treatment in another basin to remove the suspended solids by deposition thereof,

characterized in that after having passed said two steps the water to be clarified is conducted to a third basin or reservoir (3) where it is subjected to a strong oxidation with hydrogen peroxide by means of catalytic decomposition with potassium iodite (KJ) which, in combination with the solution of said hydrogen peroxide in the vicinity of pH-value 7, undergoes a permanent oxidation-reduction, and that the sewage is guided into said basin or reservoir (3) of strong oxidation via a pipe parallel to the walls thereof, said pipe extending to an adequate distance from the bottom where a means for controlling the flow direction is provided so as to avoid the mixing of the incoming water with said hydrogen peroxide which would disturb the process of decomposition, and that then the already prepared hydrogen peroxide and said catalyst solution (potassium iodite KJ) are introduced at the lower portion of said basin and close to the bottom thereof via adequate dosing means.

2. A method as claimed in claim 1, characterized in that the pH-value of the hydrogen peroxide solution is 7 or slightly below 7 in order to ease the process of decomposition.

3. A method as claimed in claims 1 and 2, characterized in that potassium hydroxide (KOH) in a concentrated solution or KJ is used as neutralizing agent whereby the reaction with elementary iodine ($J_2$) is initiated after having neutralized the hydrogen peroxide solution.

4. A method as claimed in claims 1 to 3, characterized in that the solution of the used hydrogen peroxide is a solution of 30-50 percent in weight with a density of approx. 1.2 g/ml.

5. A method as claimed in claims 1 to 4, characterized in that the water already treated with hydrogen peroxide is conducted from the third basin or reservoir (3), to which claim 1 refers, into a fourth basin or

reservoir (4) for deposition thereof by subjecting same to a weak or slow oxidation through decomposition of any hydrogen peroxide the oxigen has carried along during its ascension whereafter the sludge formed at the bottom is picked-up and cleaned.

6. A method as claimed in claims 1 to 5, characterized in that the sewage from the fourth basin or reservoir (4), to which claim 5 refers, is conducted into a fifth basin or reservoir (5) via a sand filter provided at the inlet of said basin where it is moved by means of stirrers and nozzles.

**Revendications**

1. Procédé pour l'épuration des eaux d'égout qui consiste en un pré-traitement de l'eau d'égout dans un bassin de dessablage et de régulation de courant destiné à éliminer les matières grossières flottantes et non flottantes, les corps solides flottant entre deux eaux, le sable, l'huile et les graisses non émulsifiées, et en un traitement primaire consécutif dans un autre bassin, destiné à l'élimination par précipitation des corps solides qui se trouvent en suspension, caractérisé en ce qu'après ces deux premières phases on fait passer l'eau à épurer dans un troisième bac ou bassin (3) dans lequel elle est soumise à une forte oxydation par du peroxyde d'hydrogène grâce à la décomposition calalytique employant du iodure de potassium (KJ), qui subit, en liaison avec la solution de peroxyde d'hydrogène ayant une valeur de pH amenée aux environs de 7, une oxydation-réduction constante, et que l'on fait pénétrer l'eau d'égout dans le bac ou bassin (3) de forte oxydation par une conduite située parallèlement aux parois du volume, qui est placée à une distance adéquate du fond, où un déviateur de courant est disposé en vue d'éviter que l'eau qui pénètre ne se mélange au peroxyde d'hydrogène et de ce fait perturbe le processus de décomposition, et qu'ensuite le peroxyde d'hydrogène cité déjà préparé et la solution de catalyseur (iodure de potassium KJ) sont introduits à la partie inférieure du bac et tout contre le fond au moyen de doseurs adéquats.

2. Procédé selon la revendication 1, caractérisé par le fait que le pH de la solution de peroxyde d'hydrogène est de 7 ou légèrement inférieur à 7, pour favoriser la décomposition.

3. Procédé selon les revendications 1 et 2, caractérisé par le fait que l'on utilise, comme agent de neutralisation, la potasse caustique (KOH) en solution concentrée, ou le iodure de potassium (KJ), grâce à quoi l'amorçage de la réaction avec l'iode J2 élémentaire est provoquée après neutralisation de la solution de peroxyde d'hydrogène.

4. Procédé selon les revendications 1 à 3 , caractérisé par le fait que la solution du peroxyde d'hydrogène utilisée est une solution à 30 à 50 pour cent en poids, avec une densité d'environ 1,2g/ml.

5. Procédé selon les revendications 1 à 4, caractérisé par le fait que l'eau du troisième bac ou bassin (3) déjà traitée au peroxyde d'hydrogène, à laquelle se rapporte la revendication 1 est envoyée dans un quatrième bac ou bassin (4) où on la laisse décanter, en la soumettant à une oxydation faible ou lente due à la décomposition du peroxyde d'hydrogène éventuel que l'oxygène a entrainé avec lui lors de son ascension, après quoi on s'attaque à la boue formée sur le fond et on l'évacue.

6. Procédé selon les revendications 1 à 5, caractérisé par le fait que l'eau d'égout du quatrième bac ou bassin (4), à laquelle se rapporte la revendication 5, est envoyée dans un cinquième bac ou bassin (5), à travers un filtre à sable disposé à l'entrée de ce dernier, dans lequel bassin elle est maintenue en mouvement au moyen de mécanismes agitateurs et de buses.

Fig.1

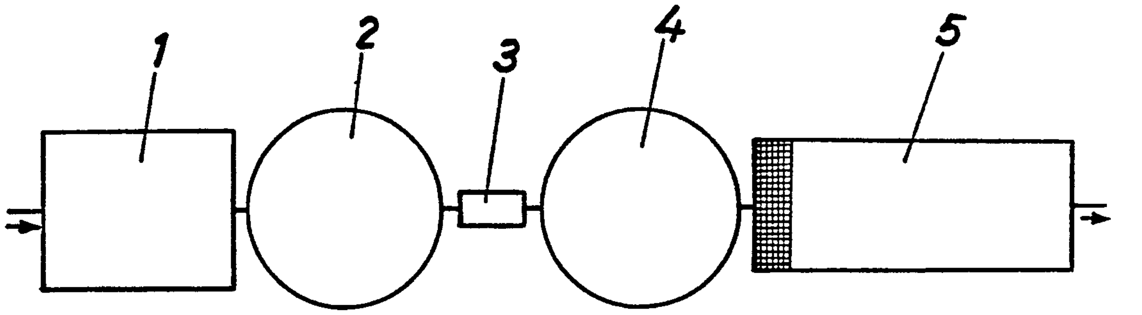


Fig. 2